# EUROPEAN PATENT SPECIFICATION

(11) **EP 4 454 526 B1**
(45) Date of publication and mention of the grant of the patent: **08.07.2026**
(21) Application number: 24172874.0
(22) Date of filing: 26.04.2024
(51) Int. Cl.: A47J 39/00

(54) **WARMING HOLDING CABINET**
WARMHALTESCHRANK
ARMOIRE DE MAINTIEN DE CHAUFFAGE

(30) Priority: 27.04.2023 US 202363462419 P
(43) Date of publication of application: 30.10.2024
(60) Divisional application: 26182136.7
(73) Proprietor: Carter-Hoffmann, LLC, Mundelein, IL 60060 (US)
(72) Inventor: RUSSEL, Gary A, Mundelein, 60060 (US); PUSHPALA, Sreekanth, Mundelein, 60060 (US); GUTIERREZ, Juan, Mundelein, 60060 (US)
(74) Representative: Leach, Sean Adam

(56) References cited:
- US-A- 4 089 322
- US-A- 4 237 623
- US-A1- 2011 005 409

## Description

### BACKGROUND OF THE INVENTION

Document US2011005409A1 discloses a heated food container for storing food in e.g. convenience stores, including a temperature control system comprising processing circuit for controlling the heater to bring the first temperature zone to a first temperature.

This disclosure relates to holding cabinets to receive previously cooked food to maintain them warm for future presentation to a customer or for future processing before serving to a customer.

### BRIEF SUMMARY

The invention is defined by the appended claims.

A first representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein the baffle includes a vertical portion with an upper edge proximate to a transition between the heat treatment portion and the inlet portion, and an oblique portion that extends from a bottom of the vertical portion to the inlet side wall of the first receiving cavity; the oblique portion comprises a plurality of apertures to allow air to flow from the first plenum and into the second plenum.

Another representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity, wherein a transition between the heat treatment portion and the inlet portion includes a narrowing portion that includes a step decrease of cross-sectional area for flow therethrough, and downstream of the narrowing portion includes an increase of cross-sectional area for air flow therethrough.

Another representative embodiment of the disclosure is provided. The embodiment includes a holding cabinet. The housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprising a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity. The floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity. The ceiling of each of the first and second receiving cavities includes a second heating pad. Each of the heating pads mounted upon the floor and each of the heating pads mounted upon the ceiling of the respective first and second receiving cavities includes first and second spaced insulation layers fixed with respect to a side of the heating pad within the respective floor or ceiling. The housing further comprises a shelf that is disposed between the first and second receiving cavities, with a top of the shelf establishing the floor of the first receiving cavity and the bottom of the shelf establishing the ceiling of the second receiving cavity, wherein the heating pad upon the floor of the first receiving cavity and the heating pad upon the ceiling of the second receiving cavity are aligned such that there is a space between the innermost of the first and second spaced insulation layers of the heating pad mounted upon the floor of the first receiving cavity and the first and second spaced insulation layers of the heating pad mounted upon the ceiling of the second receiving cavity

Another representative embodiment of the disclosure is provided. The embodiment includes a holding cabinet. The holding cabinet includes a housing that includes first and second receiving cavities and an air flow compartment, the first and second receiving cavities each configured to receive one or more trays therein, the first and second receiving cavities arranged in a vertically stacked arrangement with the first receiving cavity disposed above the second receiving cavity. The air flow compartment comprises a heat treatment portion, an inlet portion, and a return portion, wherein air flows from the heat treatment portion and into the inlet portion, from the inlet portion and into one of the first or second receiving cavity, from the respective receiving cavity into the return portion, and from the return portion to the heat treatment portion. The first and second receiving cavities each comprise a floor and a ceiling, opposite inlet and outlet side walls, and at least one opening to allow access into the respective receiving cavity to allow one or more trays to be inserted within the respective receiving cavity and removed from the respective receiving cavity. The inlet portion comprises a baffle that establishes a first plenum and a second plenum, wherein the first plenum is aligned to direct air flowing therethrough into the first receiving cavity and the second plenum is aligned to direct air flowing therethrough into the second receiving cavity. The floor of each of the first and second receiving cavities comprises a heating pad upon which a tray disposed within the respective receiving cavity rests directly upon the heating pad, wherein a top surface of the heating pad is flush mounted with a remaining portion of the floor within the respective receiving cavity. The ceiling of each of the first and second receiving cavities includes a second heating pad. The inlet side wall of both of the first and second receiving cavities includes a plurality of first apertures that allows flow from the respective first or second plenum into the respective first or second receiving cavity, wherein the outlet side wall of the both of the first and second receiving cavities includes a second plurality of apertures that allows flow from the respective receiving cavity and into the return portion. All or an overwhelming majority of the second plurality of apertures within each of the first and second receiving cavities are disposed at or below a horizontal plane through respective receiving cavity that is positioned at half of a total height of the respective receiving cavity.

Advantages of the present disclosure will become more apparent to those skilled in the art from the following description of the preferred embodiments of the disclosure that have been shown and described by way of illustration. As will be realized, the disclosed subject matter is capable of other and different embodiments, and its details are capable of modification in various respects. Accordingly, the drawings and description are to be regarded as illustrative in nature and not as restrictive.

### BRIEF DESCRIPTION OF DRAWINGS

FIG. 1 is a perspective view of a warming holding cabinet.
FIG. 2 is the view of the cabinet of FIG. 1 with the doors removed and depicting trays within each zone within the warming holding cabinet.
FIG. 3 is the view of FIG. 2 with an outer wall proximate to the inlet inner wall removed.
FIG. 4 is a front cross-sectional view of the warming cabinet of FIG. 1, and annotated to schematically depict the various air flow paths through the cabinet.
FIG. 5 is a slightly rotated view of the front cross-section of FIG. 4
FIG. 5a is a view of detail R of FIG. 5.
FIG. 6 is a detail cross-sectional view of the shelf of the housing and portions of the inlet portion (120) of the mechanical section with a tray resting upon the floor and heating pad within the first receiving cavity.
FIG. 6a is the view of FIG. 6 with the tray removed to depict and embodiment where the heating pad is flush mounted with the floor.
FIG. 7 is a perspective detail cross-sectional view of a portion of the mechanical section of the housing and schematically showing the air flow therethrough.
FIG. 8 is a perspective detail view of the housing with an outer wall proximate to the inlet inner wall removed.

### DETAILED DESCRIPTION OF THE INVENTION

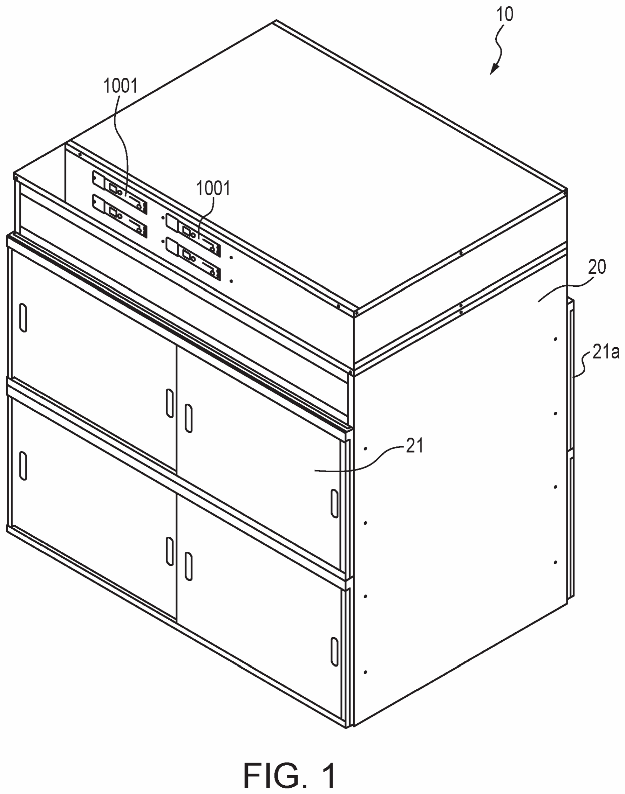

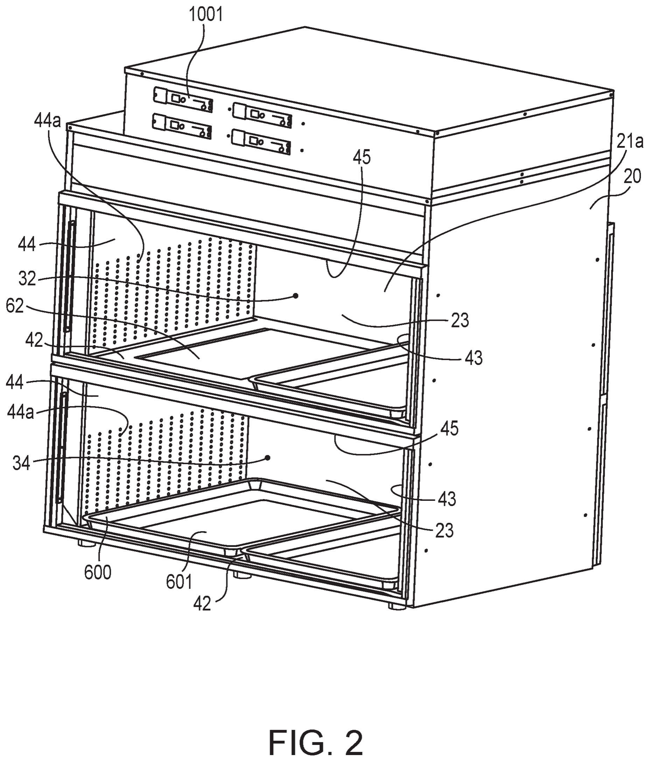

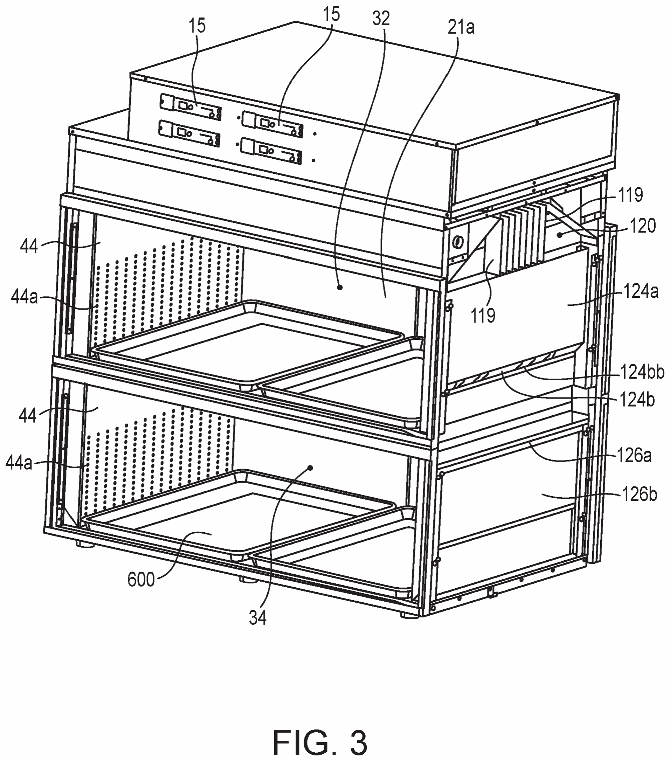

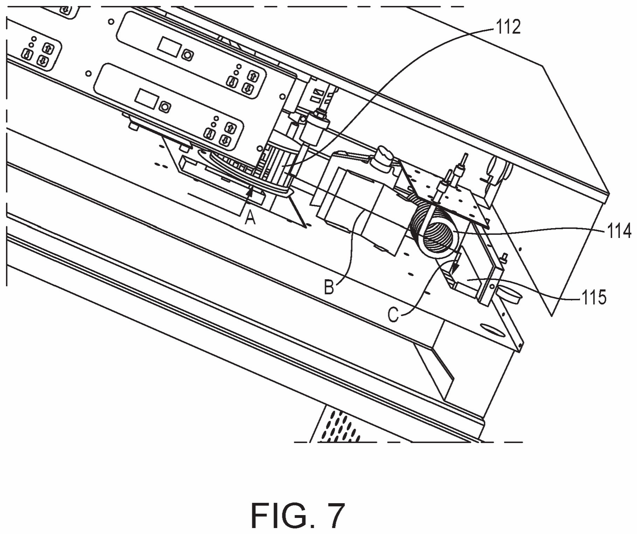

Turning now to FIGs. 1-8, a holding cabinet 10 is provided. The holding cabinet 10 is configured to hold cooked food items for a period of time before presentation to a customer or until the cooked food items are used in another step in a preparation or cooking procedure. The holding cabinet 10 is configured to create a warming environment, which can provide heat to food items within the receiving cavities 32, 34 using one, two, or all of conduction heat transfer, convection heat transfer, and radiant heat transfer to the food items. The structure and operation associated with each of these three types of heat transfer to the food within the holding compartments is discussed below.

The holding cabinet 10 may be configured to hold any types of foods that need to be or are best maintained in a hot or warm environment before serving or further using in a cooking or preparation process. The holding cabinet 10 in some embodiments may be configured to receive food upon trays 600 that rest upon a floor 42 of a receiving cavity, with the food for receipt in the holding cabinet 10 received upon the trays 600. The trays 600 may be conventional trays within the restaurant industry. In some embodiments the food sits directly upon the bottom surface 601 of the trays 600, while in other embodiments, the trays 600 may include racks (not show) therein such that the food resting upon the racks is set off from the bottom surface 601 of the tray 600. In some food storage procedures (or recipes) a liquid may be disposed within the bottom surface 601 of the tray and the food resting upon the rack may be able the liquid. As can be understood with by one of ordinary skill in the art with a thorough review of the subject specification, the liquid may boil, which creates a steam within the holding compartment 32, 34 to further warm or cook the food.

The holding cabinet 10 includes a housing 20 that encloses at least a first receiving cavity (holding compartment) 32 and a second receiving cavity 34. In other embodiments, additional receiving cavities, such as third and fourth receiving cavities (constructed like the first and second 32, 34 discussed herein) may be provided. In a preferred embodiment, the first receiving cavity 32 may be disposed above the second receiving cavity 34 in a vertically stacked arrangement. Alternatively the two receiving cavities 32, 34 may be formed as a row, i.e. at the same height within the housing 20. In this embodiment, the two cavities 32, 34 may be separated by a vertical wall.

The first and second receiving cavities 32, 34 may be constructed in the same manner, and may have the same size and geometry. A shelf 29 may be positioned between the first and second receiving cavities 32, 34, such that the shelf 29 forms the floor 42 of the first (top) receiving cavity 32 and the ceiling 45 of the second (bottom) receiving cavity 34. In embodiments with three or more vertically stacked receiving cavities shelves 29 may separate the adjacent receiving cavities as discussed herein.

The first and second receiving cavities include a floor 42, a ceiling 45, an inlet inner wall 43 and an outlet inner wall 44. Each of the first and second receiving cavities includes a side opening 23 to allow trays 600 with food disposed thereon to be placed into an removed from the cavity. The side opening may be on a single side of the housing 20, while in other embodiments like the embodiment depicted in the figures, both opposite (i.e. front and rear) sides of housing may be open to allow access into the cavity therethrough. In some embodiments, the floor 42 may be in-line with the bottom of the opening such that a tray can be slid directly onto the floor 42 when inserted into or removed from the cavity 32, 34. The openings into the first and second cavities 32, 34 may be closed with doors 21 that are moveable (i.e. slid, on hinges, etc.) to enclose the cavity to aid in the retention of heat therein and prevent hot air from blowing out of the cavity when closed, but to be opened to allow access into the cavity 32, 34. In some embodiments, the cavities 32, 34 are configured to receive one, two, or more trays upon the floor 42 and neighboring each other. These embodiments may include the same number of doors 21 as the cavity is configured to receive trays.

The housing 20 further encloses an air flow compartment 110, which includes the air flow plenums and electrical and mechanical components (discussed herein) that result in the heated air flow through the receiving cavities 32, 34 as discussed herein as well as the remaining operations of the cabinet 10.

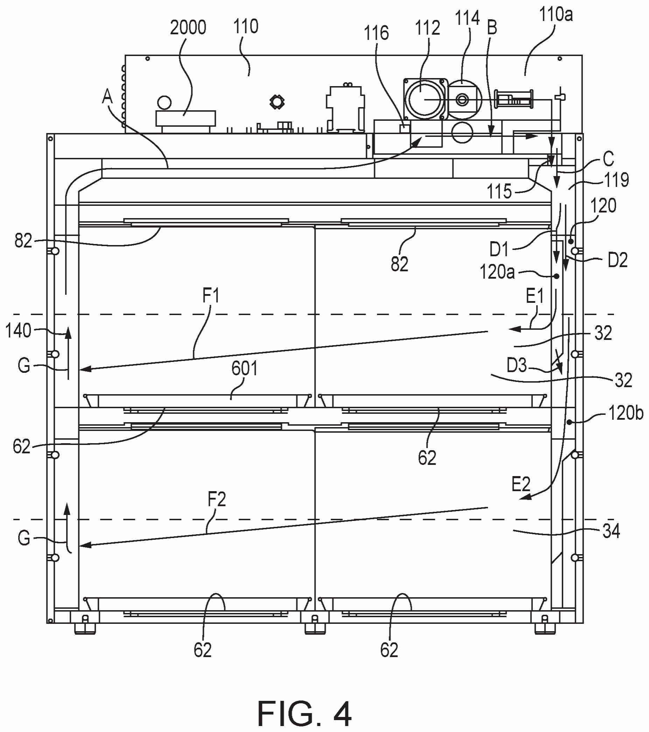

The air flow compartment 110 includes a mechanical section 110a, a return portion 140 and an inlet portion 120. The mechanical section 110a supports and encloses an air handling unit 112 and a heating element 114. The air handling unit 112 may be a fan that draws a suction (arrow A, FIG. 4) of air from the return portion 140, and discharges air (arrow B, FIG. 4) across or proximate to the heating element 114, such that air leaving the fan is heated by the heating element 114. Air flowing past or proximate to the heating element 114 is then directed to the inlet portion 120. Air flows through the inlet portion 120 (arrows D1, D2, D3; FIG. 4) and into one of the first or second receiving cavities 32, 34 (arrows E1, E2; FIG. 4). Air flows through the first or second receiving cavities 32, 34 (arrows F1, F2; FIG. 4) and then flows into the return portion 140 (arrow G; FIG. 4). Air again flows into the mechanical section 110a and is drawn into the air handling unit 112.

The mechanical section 110a may include a temperature sensor 116 (schematic) that measures a temperature of air flowing therethrough. In some embodiments, the temperature sensor 116 may be disposed within the air flow path that flows into the suction of the air handling unit 112. In other embodiments, the temperature sensor may be disposed within the air flow path that discharges from the air handling unit 112, such as before the air flows past the heating element 114.

The temperature sensor 116 may be a thermocouple, RTD, or other types of temperature sensors that can provide real-time signals that are proportional to a measured air temperature that flows past the temperature sensor 116. The temperature sensor 116 may send a signal that is proportional to the measured temperature to a controller 2000 (schematic). The controller 2000 may operate the heating element 114 using conventional temperature feedback control to assist with maintaining the sensed air temperature within a desired temperature band. One of ordinary skill in the art with a thorough review and understanding of this disclosure will be able to select and program a controller 2000 to operate the heating element 114 based upon the measured temperature within merely routine optimization.

In some embodiments, the controller 2000 may sense the position of the doors 21 and cause the air handling unit 112 to stop when a door 21 is opened to avoid pushing the hot air (flow paths F1, F2, FIG. 4) from blowing out of the openings in the housing 20.

The housing 20 may include a transition 115 between the mechanical section 110a and the inlet section 120. The transition 115 includes a step change reduction in the flow area for air flow as the air flow leaves the mechanical section 110a. This step change reduction will be understood to increase the resistance to air flow, i.e. the head loss, or air flow leaving the mechanical section 110a. This step change reduction increases the pressure within the mechanical section 110a at the discharge of the air handling unit 112, and in some embodiments causes the air that approaches the transition to exhibit turbulent flow. In some embodiments, the transition 115 may be a 50% reduction in flow area, while in other embodiments the transition 115 may result in a step reduction of over 50% such as within a range of 50% to 75%, inclusive of all values within this range.

The transition 115 may include a constant flow area along its length, while in other embodiments the transition 115 may include a changing (decreasing) flow area along its length such that the transition 115 acts as a nozzle along its length.

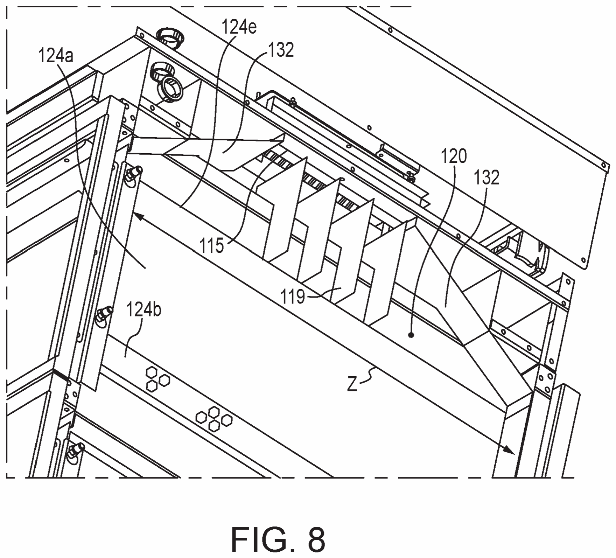

In some embodiments, after the transition 115, the flow area within the entry of the inlet section 120 may include a step increase in flow area, such as a step increase to the same or even larger flow area that existed within the mechanical section 110a that bordered the transition 115. This step increase may aid the air flow leaves the transition 115 to a laminar flow as the air approaches the baffle 120, discussed below. In other embodiments, depicted in FIG. 8, after the transition 115, the flow area within the entry of the inlet section 120 may increase for a portion of the inlet section 120 downstream of the transition, where the inlet section 120 may include angled walls 132 to increase the flow area. The angled walls 132 may reach the full width of the housing (i.e. the full space within the housing inside of the structural and insulative walls that construct the housing within the inlet section 120) just above the top edge 124e of the baffle 124, as discussed below.

In some embodiments, the inlet portion of the inlet section (i.e. just downstream of the transition 115) may include a plurality of vertical separators 119 that extend from the transition, or just below the transition 115 with an open space above top edges of the vertical separators 119 and below the transition 115. FIG. 8 depicts 4 parallel separators 119, but in some embodiments six, eight or other numbers of separators 119 may be provided. The separators 119 may be consistently spaced and extend across the front to back length of the transition 115 (see FIG. 8), or may extend at a larger total area than the front to back width of the transition 115. The separators 119 may serve to urge laminar flow through the inlet section 120 before reaching the baffle 124, and/or to assist with evening out the air mass flow rate in the front to back direction (i.e. the direction of arrows Z in FIG. 8).

The inlet section 120 includes a baffle 124 that is positioned with a top edge 124e below the transition 115. The baffle 124 separates air (arrow C) that leaves the transition 115 into a first flow path D1 through a first plenum 120a that is directed to flow into the first receiving cavity 32 and through a second plenum 120b that directs air to flow in a second flow path D2 that is directed to flow into the second receiving cavity 34. The baffle 124 includes a vertical portion 124a that is positioned below the transition 115 (and below the separators 119 when provided). The vertical portion 124a may be planar along its length. The vertical portion 124a may connect to an oblique portion 124b at a bottom of the vertical portion 124. In embodiments where the vertical portion is planar along its length the connection with the oblique portion 124b is at the bottom edge of the vertical portion 124a. The oblique portion 124b is attached to the inner inlet wall 43 of the first receiving cavity 32. In some embodiments, the inner inlet wall 43 may be multiple sheets that are fixed together or with respect to each other to establish a wall between the receiving cavity and the inlet section 120. The oblique portion 124b may connect to the inner inlet wall 43 of the first receiving cavity at a distance above the floor 42 of the first receiving cavity 32.

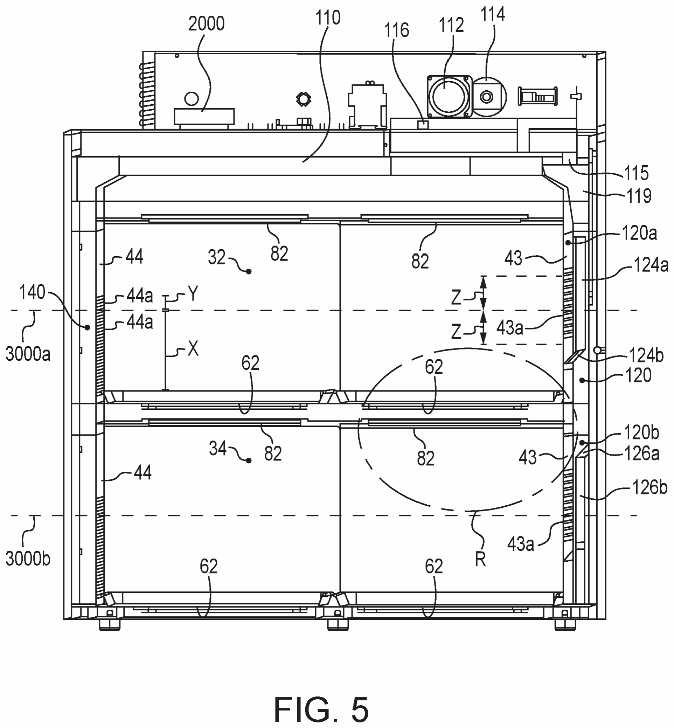

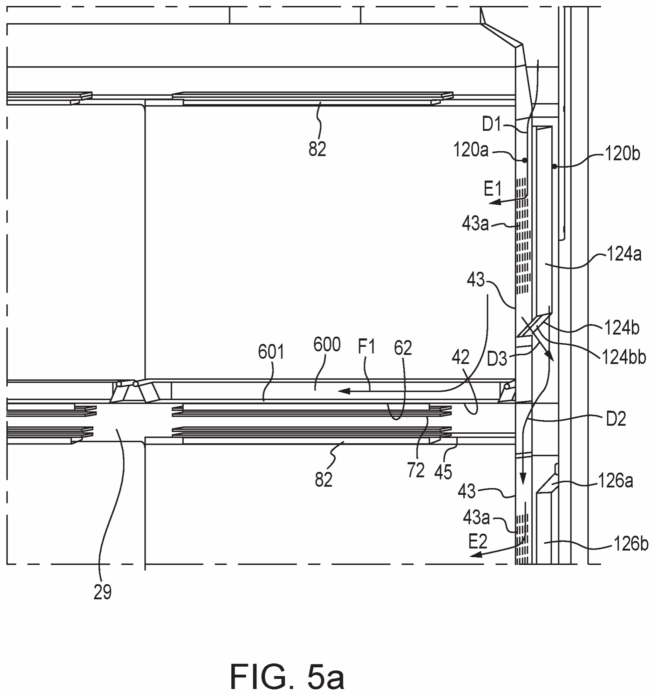

The oblique portion of the cabinet defined in the present claims extends from a bottom of the vertical portion, 124, 124a, to the inlet side wall of the first receiving cavity 32 and comprises a plurality of apertures to allow air to flow from the first plenum 120a and into the second plenum 120b. In some of the cabinets described herein the oblique portion may include one or a plurality of apertures 124c therein that allows air flow from the first plenum 120a and into the second plenum 120b (airflow D3 depicted in FIGs. 4 and 5a) and toward the second baffle 126 (discussed below).

The construction and arrangement of the baffle 124 is provided to separate the air entering the inlet section 120 into two even quantities of air such that about the same mass flow rate of air flows into and through each of the first and second receiving cavities 32, 34. The term about the same is defined herein to include the exact same as well as ratios where the mass flow rates of air into the first and second receiving cavities 32, 34 is are within 15 percent of each other, including all differences below 15 percent. Because air through the second plenum 120b needs to flow through a longer distance until reaching the second receiving cavity 34, in some embodiments, the size of the cross-sectional area of the second plenum 120b (along the portion that flows adjacent to the vertical portion 124a) may be larger than the cross-sectional area of the first plenum 120a to balance the flow. The apertures 124c may be provided, sized, and positioned to allow some flow from the first plenum 120a and into the second plenum 120b to further balance the flow into the first and second receiving cavities 32, 34.

In some embodiments, a second baffle 126 is provided to decrease the cross-sectional flow area within the second plenum 120b below the oblique portion 124b. The second baffle 126 may include a second oblique portion 126a and a vertical portion 126b below the second oblique portion 126a. The second oblique portion 126a may be parallel to and below the oblique portion 124b of the baffle. The second oblique portion 126a may extend from an outer wall of the housing 20 that is most proximate to and parallel with the inlet inner wall 43 of the second receiving cavity 34 and extend toward the inlet inner wall 43.

The first and second receiving cavities 32, 34 are configured to receive air (flows E1, E2; FIG. 4) from the inlet portion 120 through the first inlet wall 43 that borders the inlet portion 120. Each of the first and second receiving cavities 32, 34 have a plurality of inlet apertures 43a that allow for flow from the inlet portion 120 into the respective cavity. Each of the first and second receiving cavities 32, 34 further have a plurality of outlet apertures 44a that allow for air flow from the cavity into the return portion 140. The plurality of outlet apertures 44a are upon the first outlet wall 44 that borders the return portion 140.

The first receiving cavity 32 is positioned such that air flowing through the first plenum 120a flows through the plurality of inlet apertures 43a disposed within the first cavity 32 to flow therein. The second receiving cavity 34 is positioned such that air flowing through the second plenum 120b flows through the plurality of inlet apertures 43a disposed within the second cavity 34 to flow therein.

The plurality of inlet apertures 43a may be consistently spaced from adjacent first apertures and may be aligned upon the inlet inner wall 43 to form a repeating pattern. In other embodiments, the spacing of specific inlet apertures 43a from neighboring first apertures 43a may vary depending upon the location of the specific inlet aperture 43a upon the inlet inner wall 43. For example, the inlet apertures 43a near a center of the front to rear width of the respective cavity may be spaced at a further distance from adjacent inlet apertures 43a than first apertures near the front or rear side of the cavity (with the front being a side of the housing 20 with a door 21, and the rear being the opposite side of the housing also in some embodiments having a door 21a), which promotes even air mass flow rate across the entire front to rear width of the cavity. Similarly the inlet apertures 43a near the center of the front to rear width of the respective cavity may have a cross-sectional area that is smaller than first apertures 43a that are near the front or rear side of the cavity, to promote even mass flow rate across the entire front to rear width of the cavity.

The plurality of first inlet apertures 43a within the first receiving cavity 32 are aligned such that all of the inlet apertures 43a are positioned upon the inner inlet wall 43 above an intersection of the oblique portion 124b of the baffle 124 and the inner inlet wall 43 such that in some embodiments all of the air flowing into the first plenum 120a flows into the first receiving cavity 32 through the inlet apertures 43a. In other embodiments where the oblique portion 124b has a plurality of holes 124c, some of the air that enters the first plenum 120a flows into the second plenum 120b through the holes 124c (flow path D3; FIG. 4).

The plurality of second, outlet apertures 44a are disposed upon the outlet inner wall 44 to allow air to flow from the respective receiving cavity 32, 34 and into the return portion 140 (FIG. 4). disposed within the second cavity 34 to flow therein.

The plurality of outlet apertures 44a may be consistently spaced from adjacent outlet apertures and may be aligned upon the outlet inner wall 44 to form a repeating pattern. In other embodiments, the spacing of specific outlet apertures 44a from neighboring first apertures 44a may vary depending upon the location of the specific outlet aperture 44a upon the outlet inner wall 44. For example, the outlet apertures 44a near a center of the front to rear width of the respective cavity may be spaced at a further distance from adjacent apertures 44a than first apertures near the front or rear side of the, which promotes even air mass flow rate across the entire front to rear width of the cavity. Similarly the outlet apertures 44a near the center of the front to rear width of the respective cavity may have a cross-sectional area that is smaller than outlet apertures 44a that are near the front or rear side of the cavity, to promote even mass flow rate across the entire front to rear width of the cavity.

Each receiving cavity 32, 34 is sized with a shape, typically with a rectangular or square base and a height. In some embodiments, the first plurality of inlet apertures 43a may be disposed upon the inlet inner wall 43 such that the same or about the same number of inlet apertures 43a are disposed above a horizontal plane 3000a, 3000b that is halfway up the height of the respective cavity 32, 34 (FIG. 4) as the number of apertures 43a that are disposed below the horizontal plane 3000a, 3000b. The horizontal plane 3000a, 3000b may cross through some of the apertures 43a.

In some embodiments, the plurality of outlet apertures 44a are positioned upon the outlet inner wall 44 such that in some embodiments all, or in other embodiments an overwhelming majority, of the outlet apertures 44a are positioned below the horizontal plane 3000a, 3000b of the respective receiving cavity 32, 34. In some embodiments the upper-most apertures 44a may be positioned such that the respective horizontal plane 3000a, 3000b extends through the upper-most apertures 44a. The term overwhelming majority is defined herein to include 75% or more of the total number of apertures 44a up to 100% of the total number of apertures. In some embodiments where some of the apertures 44a are disposed above the respective plane 3000a, 3000b (FIG. 5) all of the apertures 44a that are above the respective plane 3000a, 3000b may be positioned such that they are closer to the respective plane 3000a, 3000b than they are to the ceiling 45 of the respective cavity 32, 34.

In some embodiments, the plurality of inlet apertures 43 are positioned upon the inlet inner wall 43 such that as many inlet apertures 43a are disposed above the horizontal plane 3000a, 3000b as are disposed below the horizontal plane. In some embodiments, some of the inlet apertures 43a are disposed such that the horizontal plane runs through the inlet apertures 43a.

One of ordinary skill in the art with a thorough review and understanding of this disclosure will understand that the placement of all or an overwhelming majority of the outlet apertures 44a at or below the respective horizontal plane 3000a, 3000b will cause the air flowing through the cavity to flow downwardly toward the trays 600 disposed within the cavity to more interact with the food disposed upon the trays, than in embodiments if many of the outlet holes were above the plane 3000a, 3000b (which would allow air to flow from relatively upwardly positioned inlet apertures 43a directly to relatively upwardly (i.e. above the plane 3000a, 3000b) positioned outlet apertures 44a, such that that air flow would not interact with the food positioned within the cavity 32, 34. The positioning of the outlet apertures 44a to promote downward flow within the cavity (F1, F2; FIG. 4 - schematic) has been found to promote turbulent air flow across the trays 600 and the food upon the trays, which improves heat transfer efficiency from the air flowing to the food.

The air heated air flow through the first and second receiving cavities 32, 34 as discussed above establishes a convection heating system of heating food disposed within the cavities. The device 10 further includes a conduction and radiant heating system as discussed herein. The floor 42 within each receiving cavity 32, 34 includes one or multiple heating pads 62 (specifically the a number of heating pads 62 spaced upon the floor 42 that is equal to the number of trays 600 that can be received upon the floor of the cavity) disposed thereon. The heating pads 62 are electric resistance heating pads that generate heat due in proportion to the amount of electric current that flows through the pads. The heating pads 62 may be operated by the controller 2000 to adjust the duty cycle of the heating pad 62 and the operating temperature of the pad 62. The housing 20 may include a display 15, or in some embodiments specific displays for each zone (e.g. location within each cavity to receive different trays - e.g. the top left display corresponds to the zone with in the left side of the top cavity 32) that displays operational information about the heating pad 62. The display 15 may also include measured ambient temperature within the specific zone.

The heating pads 62 may be flush mounted within a recess in the floor 42 (or may make up the structure of the floor 42 at the location with the heating pad 62 such that a tray 600 can smoothly slide between a portion of the floor 42 and the heating pad 62, and such that the bottom of tray 600 rests directly upon the heating pad 62.

In some embodiments, the bottom side of the heating pad 62 (i.e. the side opposite from the exposed side of the heating pad 62 that forms a part of the floor 42) may contact or be adjacent to insulative materials 72 to establish resistance to heat flow therethrough. In some embodiments, one or two or more layers 72 of planar insulative materials may be fixed to the bottom side of the heating pad 62. In embodiments with two planar insulative materials 72 may be arranged with an air gap between the two layers, or with a structural component between the two layers. A further structural component may be outboard of the outermost insulative layer 72.

As can be understood, the heating pad 62, during operation, provides heat directly to the tray 600 that rests thereon via conduction heat transfer. The heating pad 62 also radiates a portion of its heat upwardly toward the tray 600 and the food that rests upon the tray 600.

The ceiling 45 of each receiving cavity 32, 34 may also include one or more top heating elements 82, which may be resistive heating elements. The top heating elements 82 during operation generate heat that is radiated downwardly into the respective zone and onto the food that is disposed upon the tray 600 within the zone below the top heating element 82. For example, each zone may include a top heating element 82 that is disposed above the zone, and above the corresponding heating pad 62 for each zone. The top heating elements 82 are fixed to the ceiling (and therefore extend minimally downward into the cavity from the ceiling) or may form a portion of the ceiling 45. The top heating elements 45 are controlled by the controller 2000, similar to the heating pads 62 discussed above. The display 15, or the specific display 15 associated with each zone, may include operational information about each top heating element 82 that is disposed above the respective zone.

As with the heating pads 62, the back side of the top heating element 82 (i.e. the opposite the side exposed within the cavity) may contact or be adjacent to insulative materials 92 to establish resistance to heat flow therethrough. In some embodiments, one or two or more layers 92 of planar insulative materials may be fixed to the back side of the top heating element 82. In embodiments with two planar insulative materials 92 may be arranged with an air gap between the two layers, or with a structural component between the two layers. A further structural component may be outboard of the outermost insulative layer 92.

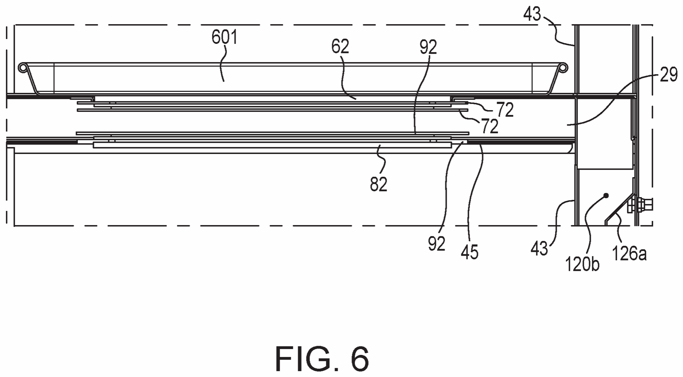

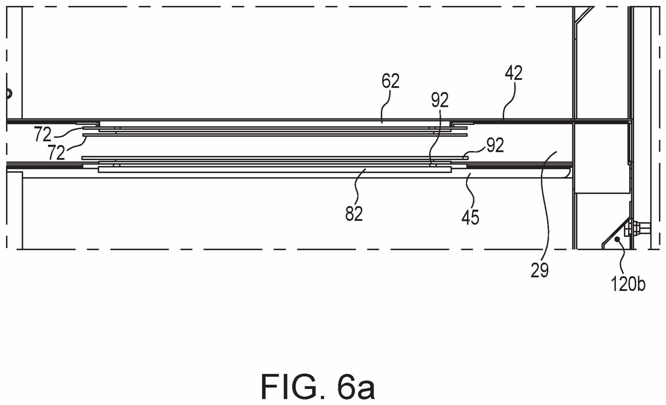

As discussed above, a shelf 29 is formed between the floor 42 (top of the shelf 29) of the first receiving cavity 32 and the ceiling 45 of the second receiving cavity 34 (bottom of shelf). As depicted in FIG. 6, the heating pad 62 and associated insulative layers 72 is disposed within the shelf 29. Similarly the top heating element 82 and associated insulative layers 92 is disposed upon (with respect to the top heating element 82) and within (with respect to the insulative layers 92) the shelf 29. In some embodiments, there is a space between an inner-most (i.e. furthest from the heating pad 62) insulative layer 72 associated with the heating pad 62 and the inner-most (i.e. furthest from the top heating element 82) insulative layer associated with the top heating element 82.

One of ordinary skill in the art with a thorough review of the subject disclosure will understand how to modify the placement and shape of the baffle 124 and the second baffle 126 in embodiments where the first and second receiving cavities 32, 34 are positioned horizontally in a row instead of vertically to result in about the same mass flow rate of air into each of the first and second (horizontally aligned) cavities. For example, plenums downstream of a transition 115 within an inlet portion 120 may be provided to direct air to the inlet inner wall 43 of each plenum, and each outlet inner wall 44 may allow air leaving each cavity to enter a return portion 140. In some embodiments, a wall that separates the two adjacent horizontally aligned cavities may include the inlet portion 120 and a baffle is provided to divide the flow of air (like flow paths D1 and D2 of the embodiment disclosed herein) such that the flow to both cavities is about the same. The outer inner wall 44 of each cavity may be on opposite sides of the housing, and with return flows G of air that flows through the apertures in the outlet inner wall 44 meeting within the mechanical section 110a proximate a suction of the air handling unit 112 (air flow A).

While the preferred embodiments of the disclosed have been described, it should be understood that the invention is not so limited and modifications may be made without departing from the disclosure. The scope of the disclosure is defined by the appended claims, and all devices that come within the scope of the claims, are intended to be embraced therein.

## Claims

1. A holding cabinet (10), comprising:
a housing (20) that includes first and second receiving cavities (32, 34) and an air flow compartment (110), the first and second receiving cavities (32.34) each configured to receive one or more trays (600) therein, the first and second receiving cavities (32,34) arranged in a vertically stacked arrangement with the first receiving cavity (32) disposed above the second receiving cavity (34);
the air flow compartment (110) comprises a heat treatment portion, an inlet portion (120),
and a return portion (140), wherein air flows from the heat treatment portion and into the inlet portion (120), from the inlet portion (120) and into one of the first or second receiving cavity (32, 34), from
the respective receiving cavity (32, 34) into the return portion (140), and from the return portion (140) to the
heat treatment portion;
the first and second receiving cavities (32, 34) each comprising a floor (42) and a ceiling (45),
opposite inlet and outlet side walls (43, 44), and at least one opening to allow access into the respective receiving cavity (32, 34) to allow one or more trays (600) to be inserted within the respective receiving cavity (32, 34) and removed from the respective receiving cavity (32, 34);
the inlet portion (120) comprises a baffle (124) that establishes a first plenum (120a) and a second
plenum (120b), wherein the first plenum (120a) is aligned to direct air flowing therethrough into the first
receiving cavity (32) and the second plenum (120b) is aligned to direct air flowing therethrough into
the second receiving cavity (34), wherein the baffle (124) includes a vertical portion (124a) with an upper
edge proximate to a transition (115) between the heat treatment portion and the inlet portion (120),
and an oblique portion (124b) that extends from a bottom of the vertical portion (124, 124a) to the inlet side
wall of the first receiving cavity (32); **characterised in that** the oblique portion (124b) comprises a plurality of apertures (124c) to
allow air to flow from the first plenum (120a) and into the second plenum (120).

2. The holding cabinet (10) of claim 1, wherein the transition (115) between the heat treatment portion and the inlet portion (120) includes a narrowing portion that includes a step decrease of cross-sectional area for flow therethrough, and downstream of the narrowing portion includes an increase of cross-sectional area for air flow therethrough.

3. The holding cabinet (10) of claim 2, further comprising a plurality of vertical separators (119)
disposed below the step change increase of cross-sectional area to separate the air flowing therethrough into a plurality of separate paths, wherein the vertical separators (119) have bottom ends that are proximate to the upper edge of the vertical portion (124a) of the baffle (124).

4. The holding cabinet (10) of claim 3, wherein the oblique portion (124b) contacts the inlet side
wall (43) of the first receiving cavity (32) at a distance above the floor (42) of the first receiving cavity (32).

5. The holding cabinet (10) of claim 4, wherein the inlet side wall (43) of both of the first and
second receiving cavities (32, 34) includes a plurality of first apertures (43a) that allows flow from the
respective first or second plenum (120a, 120b) into the respective first or second receiving cavity (32, 34),
wherein the outlet side wall of the both of the first and second receiving cavities (32, 34) includes
a second plurality of apertures (44a) that allows flow from the respective receiving cavity (32, 34) and
into the return portion (140);
wherein all of the plurality of first apertures (43a) of the first receiving cavity (32) are disposed above the position were the oblique portion (124b) contacts the inlet side wall (43) of the first receiving cavity (32).

6. The holding cabinet (10) of claim 5, wherein all or an overwhelming majority of the second plurality of apertures (44a) within each of the first and second receiving cavities (32, 34) are disposed at or below a horizontal plane (3000a, 3000b) through respective receiving cavity (32, 34) that is positioned at half of a total height of the respective receiving cavity (32, 34).

7. The holding cabinet (10) of claim 6, wherein a same number of the plurality of first apertures (43a) are disposed above the horizontal plane (3000a, 3000b) as the number of the plurality of first
apertures (43a) that are disposed below the horizontal plane (3000a, 3000b).

8. The holding cabinet (10) of any one of claims 1-7, wherein the heat treatment portion
comprises an air handling unit (112) that includes a suction inlet that draws suction from air flowing from the return portion (140), wherein the air handling unit (112) discharges air through a
heating element (114) disposed within the heat treatment portion.

9. The holding cabinet (10) of claim 8, further comprising a temperature detector disposed within the heat treatment portion and disposed within an air flow path proximate the suction inlet of the air handling unit (112), and further comprising a controller (2000) to control the operation of the heating element (114) based upon a measured temperature of the temperature detector.

10. A holding cabinet (10) of any one of claims 1-9,
wherein the floor (42) of each of the first and second receiving cavities (32, 34) comprises a
heating pad (62) upon which a tray (600) disposed within the respective receiving cavity (32, 34) rests
directly upon the heating pad (62), wherein a top surface of the heating pad (62) is flush mounted
with a remaining portion of the floor (42) within the respective receiving cavity (32, 34);
wherein the ceiling (45) of each of the first and second receiving cavities (32, 34) includes a
second heating pad (62);
each of the heating pads (62) mounted upon the floor (42) and each of the heating pads (62) mounted upon the ceiling (45) of the respective first and second receiving cavities (32, 34) includes first and second spaced insulation layers fixed with respect to a side of
the heating pad (62) within the respective floor (42) or ceiling (45);
the housing (20) further comprises a shelf (29) that is disposed between the first
and second receiving cavities (32, 34), with a top of the shelf (29) establishing the floor (42) of the first
receiving cavity (32) and the bottom of the shelf (29) establishing the ceiling (45) of the second
receiving cavity (34), wherein the heating pad (62) upon the floor (42) of the first receiving cavity (32) and
the heating pad (62) upon the ceiling (45) of the second receiving cavity (34) are aligned such that
there is a space between the innermost of the first and second spaced insulation layers
of the heating pad (62) mounted upon the floor (42) of the first receiving cavity (32) and the first and
second spaced insulation layers of the heating pad (62) mounted upon the ceiling (45) of the second receiving cavity (34).

11. The holding cabinet (10) of claim 10, wherein the inlet side wall of both of the first and second receiving cavities (32, 34) includes a plurality of first apertures (43a) that allows flow
from the respective first or second plenum (120a, 120b) into the respective first or second receiving
cavity (34), wherein the outlet side wall of the both of the first and second receiving cavities (32, 34)
includes a second plurality of apertures (44a) that allows flow from the respective receiving cavity (32, 34) and into the return portion (140);
wherein all of the plurality of first apertures (43a) of the first receiving cavity (32) are disposed above the position were the oblique portion (124b) contacts the inlet side wall of the first receiving cavity (32),
wherein all or an overwhelming majority of the second plurality of apertures (44a) within each of the first and second receiving cavities (32, 34) are disposed at or below a horizontal plane (3000a, 3000b) through respective receiving cavity (32, 34) that is positioned at half of a total
height of the respective receiving cavity (32, 34), and
wherein a same number of the plurality of first apertures (43a) are disposed above the
horizontal plane (3000a, 3000b) as the number of the plurality of first apertures (43a) that are disposed below
the horizontal plane (3000a, 3000b).

## Patentansprüche

1. Warmhalteschrank (10), umfassend:
ein Gehäuse (20), das einen ersten und einen zweiten Aufnahmehohlraum (32, 34) und eine Luftströmungskammer (110) einschließt, wobei der erste und der zweite Aufnahmehohlraum (32.34) jeweils dazu konfiguriert sind, einen oder mehrere Einsätze (600) darin aufzunehmen, wobei der erste und der zweite Aufnahmehohlraum (32, 34) in einer vertikal gestapelten Anordnung eingerichtet sind, wobei der erste Aufnahmehohlraum (32) über dem zweiten Aufnahmehohlraum (34) angeordnet ist;
wobei die Luftströmungskammer (110) eine Wärmebehandlungsabschnitt, einen Einlassabschnitt (120) und einen Rückführabschnitt (140) umfasst, wobei Luft aus dem Wärmebehandlungsabschnitt und in den Einlassabschnitt (120), aus dem Einlassabschnitt (120) und in einen von dem ersten oder dem zweiten Aufnahmehohlraum (32, 34), aus dem jeweiligen Aufnahmehohlraum (32, 34) in den Rückführabschnitt (140) und aus dem Rückführabschnitt (140) zu dem Wärmebehandlungsabschnitt strömt;
wobei der erste und der zweite Aufnahmehohlraum (32, 34) jeweils einen Boden (42) und eine Decke (45), gegenüberliegende Einlass- und Auslassseitenwände (43, 44) und mindestens eine Öffnung umfassen, um einen Zugriff zu dem jeweiligen Aufnahmehohlraum (32, 34) zu ermöglichen, um zu ermöglichen, dass ein oder mehrere Einsätze (600) in den jeweiligen Aufnahmehohlraum (32, 34) eingeführt und aus dem jeweiligen Aufnahmehohlraum (32, 34) herausgenommen werden;
wobei der Einlassabschnitt (120) eine Trennwand (124) umfasst, die einen ersten Luftraum (120a) und einen zweiten Luftraum (120b) schafft, wobei der erste Luftraum (120a) ausgerichtet ist, um dort hindurch strömende Luft in den ersten Aufnahmehohlraum (32) zu lenken, und der zweite Luftraum (120b) ausgerichtet ist, um dort hindurch strömende Luft in den zweiten Aufnahmehohlraum (34) zu lenken, wobei die Trennwand (124) einen vertikalen Abschnitt (124a), wobei eine Oberkante nahe einem Übergang (115) zwischen dem Wärmebehandlungsabschnitt und dem Einlassabschnitt (120) ist, und einen schrägen Abschnitt (124b) einschließt, der sich von einem Boden des vertikalen Abschnitts (124, 124a) zu der Einlassseitenwand des ersten Aufnahmehohlraums (32) erstreckt; **dadurch gekennzeichnet, dass** der schräge Abschnitt (124b) eine Vielzahl von Durchbrüchen (124c) umfasst, um zu ermöglichen, dass Luft aus dem ersten Luftraum (120a) und in den zweiten Luftraum (120) strömt.

2. Warmhalteschrank (10) nach Anspruch 1, wobei der Übergang (115) zwischen dem Wärmebehandlungsabschnitt und dem Einlassabschnitt (120) einen sich verengenden Abschnitt einschließt, der eine stufenweise Verringerung eines Querschnittsbereichs zur Strömung dort hindurch einschließt und dem sich verengenden Abschnitt nachgelagert eine Erhöhung des Querschnittsbereichs zur Luftströmung dort hindurch einschließt.

3. Warmhalteschrank (10) nach Anspruch 2, ferner umfassend eine Vielzahl von vertikalen Separatoren (119), die unter der sich stufenweise verändernden Erhöhung des Querschnittsbereichs angeordnet ist, um die dort hindurch strömende Luft in eine Vielzahl von separaten Wegen zu trennen, wobei die vertikalen Separatoren (119) untere Enden aufweisen, die nahe der Oberkante des vertikalen Abschnitts (124a) der Trennwand (124) sind.

4. Warmhalteschrank (10) nach Anspruch 3, wobei der schräge Abschnitt (124b) die Einlassseitenwand (43) des ersten Aufnahmehohlraums (32) in einem Abstand über dem Boden (42) des ersten Aufnahmehohlraums (32) berührt.

5. Warmhalteschrank (10) nach Anspruch 4, wobei die Einlassseitenwand (43) von beiden des ersten und des zweiten Aufnahmehohlraums (32, 34) eine Vielzahl von ersten Durchbrüchen (43a) einschließt, die eine Strömung aus dem jeweiligen ersten oder zweiten Luftraum (120a, 120b) in den jeweiligen ersten oder zweiten Aufnahmehohlraum (32, 34) ermöglicht, wobei die Auslassseitenwand der beiden des ersten und des zweiten Aufnahmehohlraums (32, 34) eine zweite Vielzahl von Durchbrüchen (44a) einschließt, die eine Strömung aus dem jeweiligen Aufnahmehohlraum (32, 34) und in den Rückführabschnitt (140) ermöglicht;
wobei alle der Vielzahl von ersten Durchbrüchen (43a) des ersten Aufnahmehohlraums (32) über der Position angeordnet sind, wo der schräge Abschnitt (124b) die Einlassseitenwand (43) des ersten Aufnahmehohlraums (32) berührt.

6. Warmhalteschrank (10) nach Anspruch 5, wobei alle oder eine überwiegende Mehrheit der zweiten Vielzahl von Durchbrüchen (44a) innerhalb jedes des ersten und des zweiten Aufnahmehohlraums (32, 34) auf oder unter einer horizontalen Ebene (3000a, 3000b) durch einen jeweiligen Aufnahmehohlraum (32, 34) angeordnet sind, die auf der Hälfte einer Gesamthöhe des jeweiligen Aufnahmehohlraums (32, 34) positioniert ist.

7. Warmhalteschrank (10) nach Anspruch 6, wobei eine gleiche Anzahl der Vielzahl von ersten Durchbrüchen (43a) über der horizontalen Ebene (3000a, 3000b) angeordnet ist wie die Anzahl der Vielzahl von ersten Durchbrüchen (43a), die unter der horizontalen Ebene (3000a, 3000b) angeordnet ist.

8. Warmhalteschrank (10) nach einem der Ansprüche 1-7, wobei der Wärmebehandlungsabschnitt eine Luftbehandlungseinheit (112) umfasst, die einen Saugeinlass einschließt, der aus Luft, die aus dem Rückführabschnitt (140) strömt, einen Sog erzeugt, wobei die Luftbehandlungseinheit (112) Luft durch ein Heizelement (114) ableitet, das innerhalb des Wärmebehandlungsabschnitts angeordnet ist.

9. Warmhalteschrank (10) nach Anspruch 8, ferner umfassend einen Temperaturdetektor, der innerhalb des Wärmebehandlungsabschnitts angeordnet ist und innerhalb eines Luftströmungswegs nahe dem Saugeinlass der Luftbehandlungseinheit (112) angeordnet ist, und ferner umfassend eine Steuereinheit (2000) zum Steuern des Betriebs des Heizelements (114) auf der Basis einer gemessenen Temperatur des Temperaturdetektors.

10. Warmhalteschrank (10) nach einem der Ansprüche 1-9, wobei der Boden (42) jedes des ersten und des zweiten Aufnahmehohlraums (32, 34) eine Heizmatte (62) umfasst, auf der ein Einsatz (600), der innerhalb des jeweiligen Aufnahmehohlraums (32, 34) angeordnet ist, direkt auf der Heizmatte (62) aufliegt, wobei eine obere Fläche der Heizmatte (62) bündig mit einem Restabschnitt des Bodens (42) innerhalb des jeweiligen Aufnahmehohlraums (32, 34) montiert ist;
wobei die Decke (45) jedes des ersten und des zweiten Aufnahmehohlraums (32, 34) eine zweite Heizmatte (62) einschließt;
wobei jede der Heizmatten (62), die auf dem Boden (42) montiert sind, und jede der Heizmatten (62), die auf der Decke (45) des jeweiligen ersten und zweiten Aufnahmehohlraums (32, 34) montiert sind, eine erste und eine zweite beabstandete Isolierschicht einschließen, die in Bezug auf eine Seite der Heizmatte (62) innerhalb des jeweiligen Bodens (42) oder der jeweiligen Decke (45) fixiert ist;
wobei das Gehäuse (20) ferner eine Ablage (29) umfasst, die zwischen dem ersten und dem zweiten Aufnahmehohlraum (32, 34) angeordnet ist, wobei eine Oberseite der Ablage (29) den Boden (42) des ersten Aufnahmehohlraums (32) schafft und der Boden der Ablage (29) die Decke (45) des zweiten Aufnahmehohlraums (34) schafft, wobei die Heizmatte (62) auf dem Boden (42) des ersten Aufnahmehohlraums (32) und die Heizmatte (62) auf der Decke (45) des zweiten Aufnahmehohlraums (34) derart ausgerichtet sind, dass ein Raum zwischen der innersten der ersten und der zweiten beabstandeten Isolierschicht der Heizmatte (62), die auf dem Boden (42) des ersten Aufnahmehohlraums (32) montiert ist, und der ersten und der zweiten beabstandeten Isolierschicht der Heizmatte (62), die auf der Decke (45) des zweiten Aufnahmehohlraums (34) montiert ist, vorliegt.

11. Warmhalteschrank (10) nach Anspruch 10, wobei die Einlassseitenwand von beiden des ersten und des zweiten Aufnahmehohlraums (32, 34) eine Vielzahl von ersten Durchbrüchen (43a) einschließt, die eine Strömung aus dem jeweiligen ersten oder zweiten Luftraum (120a, 120b) in den jeweiligen ersten oder zweiten Aufnahmehohlraum (34) ermöglicht, wobei die Auslassseitenwand der beiden des ersten und des zweiten Aufnahmehohlraums (32, 34) eine zweite Vielzahl von Durchbrüchen (44a) einschließt, die eine Strömung aus dem jeweiligen Aufnahmehohlraum (32, 34) und in den Rückführabschnitt (140) ermöglicht;
wobei alle der Vielzahl von ersten Durchbrüchen (43a) des ersten Aufnahmehohlraums (32) über der Position angeordnet sind, wo der schräge Abschnitt (124b) die Einlassseitenwand des ersten Aufnahmehohlraums (32) berührt,
wobei alle oder eine überwiegende Mehrheit der zweiten Vielzahl von Durchbrüchen (44a) innerhalb jedes des ersten und des zweiten Aufnahmehohlraums (32, 34) auf oder unter einer horizontalen Ebene (3000a, 3000b) durch einen jeweiligen Aufnahmehohlraum (32, 34) angeordnet sind, die auf der Hälfte einer Gesamthöhe des jeweiligen Aufnahmehohlraums (32, 34) positioniert ist, und
wobei eine gleiche Anzahl der Vielzahl von ersten Durchbrüchen (43a) über der horizontalen Ebene (3000a, 3000b) angeordnet ist wie die Anzahl der Vielzahl von ersten Durchbrüchen (43a), die unter der horizontalen Ebene (3000a, 3000b) angeordnet ist.

## Revendications

1. Armoire de stockage (10), comprenant :
un logement (20) qui inclut des première et deuxième cavités de réception (32, 34) et un compartiment d'écoulement d'air (110), les première et deuxième cavités de réception (32.34) configurées chacune pour recevoir un ou plusieurs plateaux (600) dans celles-ci, les première et deuxième cavités de réception (32,34) agencées selon un agencement empilé verticalement avec la première cavité de réception (32) disposée au-dessus de la deuxième cavité de réception (34) ;
le compartiment d'écoulement d'air (110) comprend une partie de traitement thermique, une partie d'admission (120) et une partie de retour (140), dans laquelle l'air s'écoule depuis la partie de traitement thermique et jusque dans la partie d'admission (120), depuis la partie d'admission (120) et jusque dans l'une de la première ou de la deuxième cavité de réception (32, 34), depuis la cavité de réception respective (32, 34) jusque dans la partie de retour (140), et de la partie de retour (140) à la partie de traitement thermique ;
les première et deuxième cavités de réception (32, 34) comprenant chacune un plancher (42) et un plafond (45), des parois latérales d'admission et d'évacuation opposées (43, 44), et au moins une ouverture pour permettre l'accès jusque dans la cavité de réception respective (32, 34) afin de permettre à un ou plusieurs plateaux (600) d'être insérés au sein de la cavité de réception respective (32, 34) et retirés de la cavité de réception respective (32, 34) ;
la partie d'admission (120) comprend un déflecteur (124) qui établit un premier plénum (120a) et un deuxième plénum (120b), dans laquelle le premier plénum (120a) est aligné pour diriger l'air s'écoulant à travers celui-ci jusque dans la première cavité de réception (32) et le deuxième plénum (120b) est aligné pour diriger l'air qui s'écoule à travers celui-ci jusque dans la deuxième cavité de réception (34), dans laquelle le déflecteur (124) inclut une partie verticale (124a) avec un bord supérieur à proximité d'une transition (115) entre la partie de traitement thermique et la partie d'admission (120), et une partie oblique (124b) qui s'étend d'une partie inférieure de la partie verticale (124, 124a) à la paroi latérale d'admission de la première cavité de réception (32) ; **caractérisée en ce que** la partie oblique (124b) comprend une pluralité d'ouvertures (124c) pour permettre à l'air de s'écouler depuis le premier plénum (120a) et jusque dans le deuxième plénum (120).

2. Armoire de stockage (10) selon la revendication 1, dans laquelle la transition (115) entre la partie de traitement thermique et la partie d'admission (120) inclut une partie de rétrécissement qui inclut une diminution par étapes d'une aire de la section droite pour un écoulement à travers celle-ci, et en aval de la partie de rétrécissement inclut une augmentation de l'aire de la section droite pour un écoulement d'air à travers celle-ci.

3. Armoire de stockage (10) selon la revendication 2, comprenant en outre une pluralité de séparateurs verticaux (119) disposés en dessous de l'augmentation par changement d'étape de l'aire de la section droite pour séparer l'air s'écoulant à travers celle-ci en une pluralité de chemins séparés, dans laquelle les séparateurs verticaux (119) ont des extrémités inférieures qui sont à proximité du bord supérieur de la partie verticale (124a) du déflecteur (124).

4. Armoire de stockage (10) selon la revendication 3, dans laquelle la partie oblique (124b) entre en contact avec la paroi latérale d'admission (43) de la première cavité de réception (32) à une distance au-dessus du plancher (42) de la première cavité de réception (32).

5. Armoire de stockage (10) selon la revendication 4, dans laquelle la paroi latérale d'admission (43) des deux première et deuxième cavités de réception (32, 34) inclut une pluralité de premières ouvertures (43a) qui permet un écoulement depuis le premier ou deuxième plénum respectif (120a, 120b) jusque dans la première ou deuxième cavité de réception respective (32, 34), dans laquelle la paroi latérale d'évacuation des deux première et deuxième cavités de réception (32, 34) inclut une deuxième pluralité d'ouvertures (44a) qui permet un écoulement depuis la cavité de réception respective (32, 34) et jusque dans la partie de retour (140) ;
dans laquelle toutes celles de la pluralité de premières ouvertures (43a) de la première cavité de réception (32) sont disposées au-dessus de la position où la partie oblique (124b) entre en contact avec la paroi latérale d'admission (43) de la première cavité de réception (32).

6. Armoire de stockage (10) selon la revendication 5, dans laquelle toutes celles ou une majorité écrasante de la deuxième pluralité d'ouvertures (44a) au sein de chacune des première et deuxième cavités de réception (32, 34) sont disposées au niveau ou en dessous d'un plan horizontal (3000a, 3000b) en travers de la cavité de réception respective (32, 34) qui est positionné au niveau de la moitié d'une hauteur totale de la cavité de réception respective (32, 34).

7. Armoire de stockage (10) selon la revendication 6, dans laquelle un même nombre d'ouvertures de la pluralité de premières ouvertures (43a) sont disposées au-dessus du plan horizontal (3000a, 3000b) que le nombre d'ouvertures de la pluralité de premières ouvertures (43a) qui sont disposées en dessous du plan horizontal (3000a, 3000b).

8. Armoire de stockage (10) selon l'une quelconque des revendications 1 à 7, dans laquelle la partie de traitement thermique comprend une unité de conditionnement d'air (112) qui inclut une admission d'aspiration qui tire une aspiration d'air s'écoulant depuis la partie de retour (140), dans laquelle l'unité de conditionnement d'air (112) décharge de l'air à travers un élément chauffant (114) disposé au sein de la partie de traitement thermique.

9. Armoire de stockage (10) selon la revendication 8, comprenant en outre un détecteur de température disposé au sein de la partie de traitement thermique et disposé au sein d'un chemin d'écoulement d'air à proximité de l'admission d'aspiration de l'unité de conditionnement d'air (112), et comprenant en outre un dispositif de commande (2000) pour commander le fonctionnement de l'élément chauffant (114) sur la base d'une température mesurée du détecteur de température.

10. Armoire de stockage (10) selon l'une quelconque des revendications 1 à 9, dans laquelle le plancher (42) de chacune des première et deuxième cavités de réception (32, 34) comprend un coussin chauffant (62) sur quoi un plateau (600) disposé au sein de la cavité de réception respective (32, 34) repose directement sur le coussin chauffant (62), dans laquelle une surface supérieure du coussin chauffant (62) est montée au ras d'une partie restante du plancher (42) au sein de la cavité de réception respective (32, 34) ;
dans laquelle le plafond (45) de chacune des première et deuxième cavités de réception (32, 34) inclut un deuxième coussin chauffant (62) ;
chacun des coussins chauffants (62) montés sur le plancher (42) et chacun des coussins chauffants (62) montés sur le plafond (45) des première et deuxième cavités de réception respectives (32, 34) incluent des première et deuxième couches d'isolation espacées fixes par rapport à un côté du coussin chauffant (62) au sein du plancher (42) ou du plafond (45) respectif ;
le logement (20) comprend en outre une étagère (29) qui est disposée entre les première et deuxième cavités de réception (32, 34), avec une partie supérieure de l'étagère (29) constituant le plancher (42) de la première cavité de réception (32) et la partie inférieure de l'étagère (29) constituant le plafond (45) de la deuxième cavité de réception (34), dans laquelle le coussin chauffant (62) sur le plancher (42) de la première cavité de réception (32) et le coussin chauffant (62) au plafond (45) de la deuxième cavité de réception (34) sont alignés de sorte qu'il y a un espace entre la plus interne des première et deuxième couches d'isolation espacées du coussin chauffant (62) monté sur le plancher (42) de la première cavité de réception (32) et des première et deuxième couches d'isolation espacées du coussin chauffant (62) monté au plafond (45) de la deuxième cavité de réception (34).

11. Armoire de stockage (10) selon la revendication 10, dans laquelle la paroi latérale d'admission (43) des deux première et deuxième cavités de réception (32, 34) inclut une pluralité de premières ouvertures (43a) qui permet un écoulement depuis le premier ou deuxième plénum respectif (120a, 120b) jusque dans la première ou deuxième cavité de réception respective (32, 34), dans laquelle la paroi latérale d'évacuation des deux première et deuxième cavités de réception (32, 34) inclut une deuxième pluralité d'ouvertures (44a) qui permet un écoulement depuis la cavité de réception respective (32, 34) et jusque dans la partie de retour (140) ;
dans laquelle toutes celles de la pluralité de premières ouvertures (43a) de la première cavité de réception (32) sont disposées au-dessus de la position où la partie oblique (124b) entre en contact avec la paroi latérale d'admission de la première cavité de réception (32), dans laquelle toutes celles ou une majorité écrasante de la deuxième pluralité d'ouvertures (44a) au sein de chacune des première et deuxième cavités de réception (32, 34) sont disposées au niveau ou en dessous d'un plan horizontal (3000a, 3000b) en travers de la cavité de réception respective (32, 34) qui est positionné au niveau de la moitié d'une hauteur totale de la cavité de réception respective (32, 34), et dans laquelle un même nombre d'ouvertures de la pluralité de premières ouvertures (43a) sont disposées au-dessus du plan horizontal (3000a, 3000b) que le nombre d'ouvertures de la pluralité de premières ouvertures (43a) qui sont disposées en dessous du plan horizontal (3000a, 3000b).
